# FASCICULE DE BREVET EUROPEEN

(11) **EP 0 717 215 B1**
(45) Date de publication et mention de la délivrance du brevet: **24.03.1999**
(21) Numéro de dépôt: 95402717.3
(22) Date de dépôt: 01.12.1995
(51) Int. Cl.: F16F 7/12, B62D 21/15

(54) **Poutre d'absorption d'énergie et flan métallique mince pour réaliser cette poutre d'absorption d'énergie**
Energieabsorbierender Balken und dünnes metallisches Blech zu dessen Realisierung
Energy absorption beam and thin metallic plate for the realisation thereof

(30) Priorité: 12.12.1994 FR 9414937
(43) Date de publication de la demande: 19.06.1996
(73) Titulaire: SOLLAC S.A., 92800 Puteaux (FR)
(72) Inventeur: De Smet, Gabriel, 95800 Enghien les Bains (FR)
(74) Mandataire: Lanceplaine, Jean-Claude

(56) Documents cités:
- DE-A- 2 212 713
- US-A- 3 479 902
- US-A- 3 815 437
- US-A- 4 272 114
- US-A- 4 684 151
- PATENT ABSTRACTS OF JAPAN vol. 014 no. 440 (M-1028) ,20 Septembre 1990 & JP-A-02 175452 (ISUZU MOTORS LTD) 6 Juillet 1990,

## Description

La présente invention a pour objet une poutre optimisée d'absorption d'énergie et un flan métallique mince pour la réalisation de cette poutre d'absorption d'énergie destinée à former notamment un longeron ou une traverse d'un véhicule automobile ou ferroviaire.

Les véhicules automobiles ou ferroviaires comportent des éléments de structure essentiellement constitués de longerons et de traverses destinés à servir de support et de points d'ancrage à différents organes du véhicule, comme par exemple dans le cas d'un véhicule automobile, le moteur, le train avant ou arrière et les éléments formant la carrosserie.

Ces longerons et traverses sont généralement constitués par des poutres qui sont calculées et dimensionnées pour absorber un maximum d'énergie en cas de choc du véhicule.

En effet, il est communément admis que le corps humain ne peut pas encaisser une accélération ou une décélération instantanée supérieure à 50g, c'est à dire 50 fois 9,81m/s² pendant plus de trois millisecondes sans entraîner des lésions mortelles.

Si la structure des véhicules n'absorbe pas suffisamment d'énergie en cas de choc, des lésions sinon mortelles, du moins graves et irréversibles peuvent se produire sur les occupants même en cas de choc relativement peu violent.

Pour éviter cela, les législateurs ont mis en place des normes auxquelles doivent répondre tous les véhicules.

Par exemple, les véhicules automobiles doivent subir un test consistant à les lancer contre un obstacle fixe et indéformable à une vitesse de 15 mètres par seconde, soit environ 57km/h sans que les mannequins instrumentés modélisant les occupants ne subissent une accélération supérieure à 50g.

Un véhicule comportant des poutres d'absorption d'énergie élémentaires de section carrée ou rectangulaire réalisées à partir d'un flan métallique mince ne permet pas de subir avec succès ce test d'impact car elles n'absorbent pas suffisamment d'énergie lors de leur déformation si bien qu'une trop grande accélération est transmise aux occupants.

En effet, l'analyse du mode de déformation de ce genre de poutres lors d'une sollicitation en compression axiale ou périaxiale, montre que ces poutres se déforment essentiellement en flexion.

Les seules parties subissant une déformation en allongement ou encore appelée traction ou extension plane, sont les arêtes ce qui représente entre 5 et 10% de la surface totale développée de la poutre. Or, on sait que la déformation d'un flan métallique en allongement absorbe une quantité d'énergie nettement supérieure à celle de la déformation d'un même flan de tôle en flexion pure.

C'est pour cela que les poutres d'absorption d'énergie utilisées jusqu'à maintenant présentent des sections complexes généralement en forme de I permettant de multiplier le nombre d'arêtes travaillant en allongement et de ce fait d'augmenter le pourcentage de la surface totale développée de la poutre se déformant en allongement.

Il est connu de former sur les poutres des emboutis qui permettent d'organiser la déformation de ces poutres lors d'une sollicitation en compression axiale afin d'éviter que celles-ci se déforment de manière aléatoire.

Mais, ces emboutis si ils permettent d'organiser la déformation, ne permettent pas d'augmenter de manière significative le pourcentage de la surface totale développée de la poutre se déformant en allongement.

Une solution pour que les poutres puissent absorber à géométrie égale une plus grande quantité d'énergie consisterait à augmenter l'épaisseur du flan métallique constituant ces poutres.

Mais, cette solution a pour inconvénient d'augmenter considérablement le poids de ces poutres d'absorption d'énergie.

On connaît également dans le document US-A-4 684 151 une poutre d'absorption d'énergie réalisée à partir d'au moins un flan métallique mince dans laquelle le flan métallique est orthotrope pour générer un maximum de déformations en allongement du matériau constitutif dudit flan métallique.

L'invention a pour but de proposer une poutre d'absorption d'énergie permettant d'augmenter de manière importante le pourcentage de la surface totale de la poutre se déformant en allongement lors d'une sollicitation en compression axiale et d'augmenter la sécurité des occupants des véhicules, tout en diminuant le poids des véhicules par l'utilisation de flans métalliques minces pour la réalisation de ladite poutre d'absorption d'énergie.

L'invention a donc pour objet une poutre d'absorption d'énergie réalisée à partir d'au moins un flan métallique mince orthotrope pour générer un maximum de déformations en allongement du matériau constitutif dudit flan métallique mince et pour contrôler les déformations lors d'une sollicitation en déformation de ladite poutre, notamment en compression axiale, caractérisée en ce que le flan métallique mince présente une hétérogénéite d'épaisseur formée d'une alternance de creux et de reliefs.

L'invention a également pour objet un flan métallique mince pour la réalisation d'une poutre d'absorption d'énergie comportant au moins trois côtés, notamment d'un longeron ou d'une traverse d'un véhicule automobile ou ferroviaire, ledit flan métallique étant orthotrope pour générer un maximum de déformation en allongement du matériau constitutif dudit flan métallique mince et pour contrôler les déformations lors d'une sollicitation en déformations de ce flan métallique mince, notamment en compression axiale, caractérisé en ce qu'il présente une hétérogénéité d'épaisseur formée d'une alternance de creux et de reliefs.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique en perspective d'un exemple de réalisation d'une poutre d'absorption d'énergie conforme à l'invention,
- la Fig. 2 est une vue schématique en perspective d'un premier mode de réalisation d'un flan métallique mince selon l'invention et à partir duquel est formée une poutre d'absorption d'énergie,
- la Fig. 3 est une vue schématique en perspective d'un second mode de réalisation d'un flan métallique mince selon l'invention et à partir duquel est formée une poutre d'absorption d'énergie,
- la Fig. 4 est une vue schématique en perspective d'un troisième mode de réalisation d'un flan métallique mince selon l'invention et à partir duquel est formée une poutre d'absorption d'énergie,
- la Fig. 5 est une vue schématique en plan d'une poutre d'absorption d'énergie partiellement déformée,
- la Fig. 6 est une vue schématique de l'extrémité de la poutre d'absorption d'énergie partiellement déformée,
- la Fig. 7 est une vue schématique en perspective d'un longeron par exemple d'un véhicule automobile réalisé à partir d'une poutre d'absorption d'énergie selon l'invention,
- la Fig. 8 est une vue schématique en perspective d'un quatrième mode de réalisation d'un flan métallique mince selon l'invention et à partir duquel est formée une poutre d'absorption d'énergie,
- la Fig. 9 est une vue schématique en perspective d'une variante d'un longeron par exemple d'un véhicule automobile réalisé à partir de deux flans métalliques minces selon l'invention.

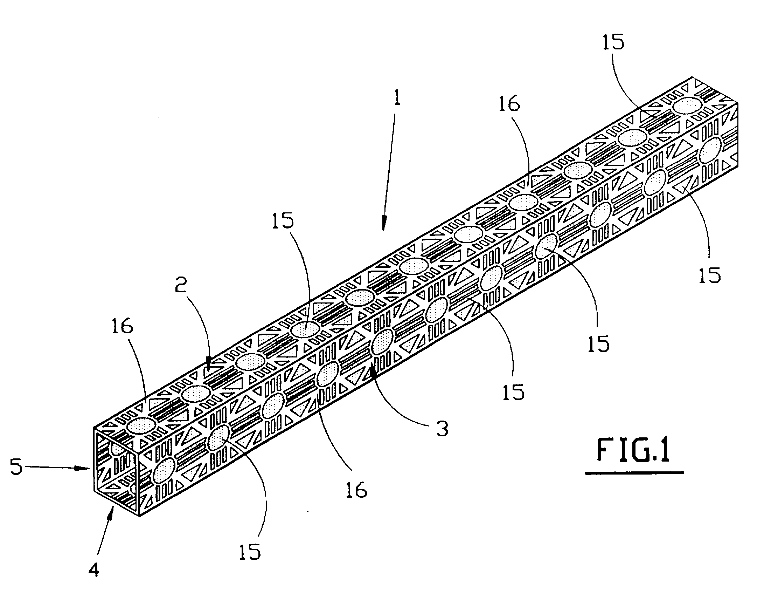

La poutre 1 d'absorption d'énergie comprend au moins trois côtés et dans l'exemple de réalisation représenté à la Fig. 1, cette poutre 1 est de section parallélépipédique et est formée à partir d'un flan métallique mince, c'est à dire d'épaisseur maximale inférieure ou égale à 3mm.

Chaque côté 2, 3, 4 et 5 de la poutre 1 est orthotrope pour générer un maximum de déformations en allongement du matériau constitutif dudit flan métallique mince et pour contrôler les déformations lors d'une sollicitation en déformation de ladite poutre 1, notamment en compression axiale.

Pour générer ce maximum de déformations en allongement du matériau constitutif de la poutre et pour obtenir ce contrôle de déformation, chaque côté 2, 3, 4 et 5 de la poutre 1 présente une hétérogénéité d'épaisseur formée d'une alternance de creux et de reliefs ou présente une succession de trous ou une hétérogénéité d'épaisseur formée d'une alternance de creux et de reliefs et d'une succession de trous.

Les creux et les reliefs sont répartis selon au moins deux directions orthogonales de chaque face des côtés de la poutre 1 d'absorption d'énergie.

De préférence, la répartition et la géométrie des creux et des reliefs sont identiques sur les deux faces de chaque côté 2, 3, 4 et 5 de la poutre 1, mais il est tout à fait envisageable que ces creux et reliefs ne soient pas identiques sur chacune des faces de la poutre 1.

Selon une variante, les creux et les reliefs sont réalisés sur une des faces de chaque côté 2, 3, 4 et 5 de la poutre 1, c'est à dire sur la face externe ou la face interne de chaque côté.

Selon une autre variante, la périphérie des trous est bordée par la pose d'un oeillet métallique serti sur le bord de chaque trou, comme on le verra ultérieurement.

Selon l'exemple de réalisation représenté à la Fig. 1, la poutre 1 est formée à partir d'un flan métallique mince 10 par exemple en acier ou en aluminium ou en alliage d'aluminium.

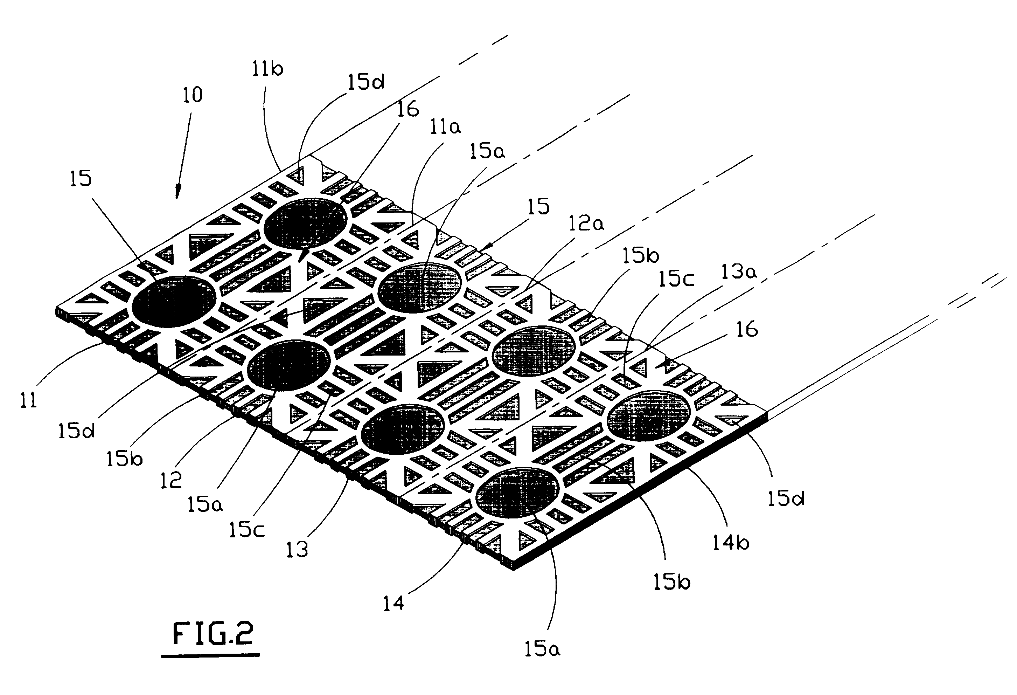

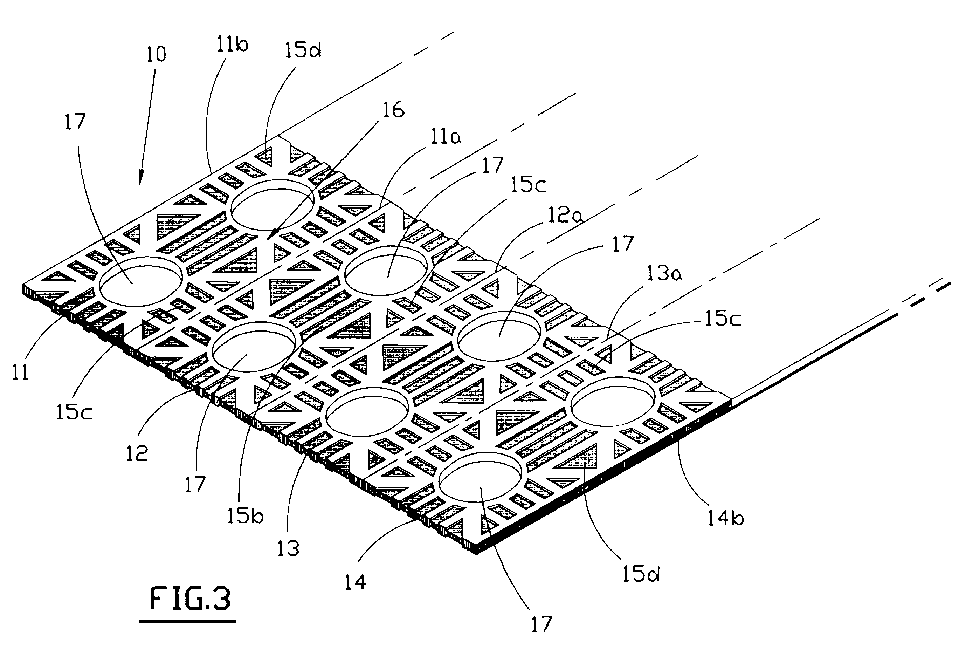

Comme représenté sur les Figs. 2 et 3, le flan métallique 10 est constitué de quatre portions 11, 12, 13 et 14 formant chacun un côté 2, 3, 4 et 5 de la poutre 1 d'absorption d'énergie selon l'invention.

Selon un premier mode de réalisation représenté à la Fig. 2, chaque portion 11, 12, 13 et 14 est orthotrope et est formée d'une alternance de creux 15 et de reliefs 16.

La répartition et la géométrie de ces creux 15 et de ces reliefs 16 ainsi que leur forme sont fonction de la géométrie de la poutre 1 et des déformations en allongement à obtenir lors d'une sollicitation en déformation de ladite poutre.

Par exemple, dans le cas d'une poutre 1 de section parallélépipèdique sollicitée en compression axiale ou périaxiale et pour laquelle il faut absorber un maximum d'énergie par écrasement en accordéon de ladite poutre selon son axe longitudinal, le mode préférentiel de répartition de ces creux 15 et de ces reliefs 16 est représenté à la Fig. 2.

De manière générale, les creux 15 sont formés par une alternance de creux 15a de section circulaire, de creux 15b de forme allongée et par exemple de section sensiblement rectangulaire, orientés parallèlement à l'axe de symétrie longitudinal de chaque portion, de creux 15c de forme allongée et par exemple de section sensiblement rectangulaire, orientés perpendiculairement à l'axe de symétrie longitudinal de chaque portion et de creux 15d de section triangulaire.

Les creux 15a de section circulaire sont ménagés dans le sens longitudinal de chaque portion 11, 12, 13 et 14 du flan métallique mince 10 de telle sorte que les centres de ces creux 15a soient situés sur l'axe de symétrie longitudinal de chaque portion 11, 12, 13 et 14 correspondante.

Les creux 15b de forme allongée orientés parallèlement à l'axe de symétrie longitudinal de chaque portion 11, 12, 13 et 14 sont disposés, d'une part, entre les creux 15a de section circulaire et, d'autre part, entre les creux 15a de section circulaire et l'extrémité de chaque portion 11, 12, 13 et 14.

Les creux 15c de forme allongée et orientés perpendiculairement à l'axe de symétrie longitudinal de chaque portion 11, 12, 13 et 14 sont disposés entre les creux 15a de section circulaire de deux portions adjacentes 11 et 12 ; 13 et 14 et situées sur le même axe transversal du flan métallique mince 10.

Les creux 15c sont également disposés entre les creux 15a de section circulaire de chaque portion d'extrémité 11 et 14 du flan métallique mince et le bord latéral libre 11b et 14b de ladite portion d'extrémité 11 et 14 correspondante.

De préférence, ces creux 15c ne s'étendent pas jusqu'au bord latéral libre 11b et 14b de chaque portion d'extrémité 11 et 14, ni jusqu'à la ligne de pliage 11a, 12a et 13a située entre deux portions adjacentes 11 et 12 ; 13 et 14 afin qu'il existe un creux 15c de part et d'autre de cette ligne de pliage 11a, 12a et 13a.

Les creux 15d de section triangulaire sont disposés entre les creux 15b de forme allongée, orientés parallèlement à l'axe de symétrie longitudinal d'une portion 11, 12, 13 et 14 et les creux 15b de forme allongée orientés parallèlement à l'axe de symétrie longitudinal de la portion adjacente.

Selon un second mode de réalisation représenté à la Fig. 3, les creux 15a de section circulaire du premier mode de réalisation représenté à la Fig. 2 sont remplacés par des trous 17.

Les arêtes d'intersection entre les creux 15, les reliefs 16 et/ou les trous 17 sont formées par des arrondis afin d'éviter les arêtes vives qui sont des sources d'amorce de rupture lors d'une sollicitation en déformation de la poutre, notamment en compression axiale.

Les creux 15 et les reliefs 16 peuvent être formés sur les deux faces de chaque portion 11, 12, 13 et 14 des flans métalliques minces 10, ou sur l'une des faces de chaque portion, soit la face supérieure ou soit la face inférieure ou encore alternativement sur l'une des faces ou sur les deux faces de chacune des portions 11, 12, 13 et 14.

De plus, la répartition et la forme des creux 15 et des reliefs 16 peuvent être identiques ou différentes sur les deux faces ou sur chaque face des portions 11, 12, 13 et 14 en fonction de la géométrie de la poutre et des déformations en allongement à obtenir lors d'une sollicitation en déformation de la poutre 1 formée à partir de ce flan métallique mince 10.

Enfin, le diamètre et/ou l'espacement des trous 17 peuvent être variables sur la longueur de chaque portion 11, 12, 13 et 14 du flan métallique mince 10 en fonction de la géométrie de la poutre et des déformations en allongement à obtenir.

La poutre 1 est formée à partir du flan métallique mince 10 représentée sur les Figs. 2 et 3 par pliage dudit flan métallique selon les lignes 11a, 12a et 13a de telle sorte que chaque portion 11, 12, 13 et 14 forme un côté 2, 3, 4 et 5 de la poutre 1 d'absorption d'énergie.

Les bords latéraux libres 11b et 14b sont reliés entre eux, par exemple par soudage, après pliage du flan métallique mince 10. Ainsi, le flan métallique mince 10 comporte autant de portions que la poutre 1 comporte de côtés.

La poutre 1 d'absorption d'énergie peut être de section constante sur toute sa longueur ou de section progressivement croissante ou décroissante.

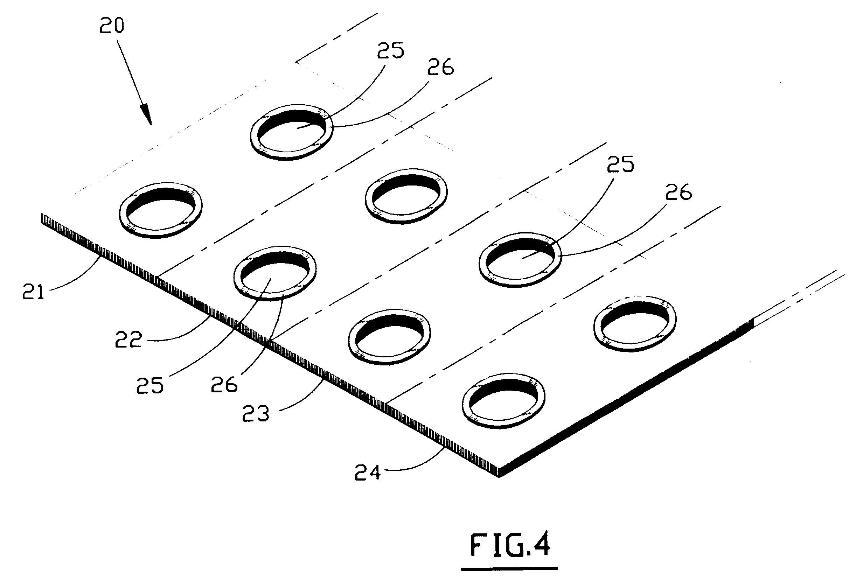

Sur la Fig. 4, on a représenté une variante d'un flan métallique mince 20 pour réaliser une poutre d'absorption d'énergie selon l'invention.

Dans ce cas, chaque portion 21, 22, 23 et 24 du flan métallique mince 20 comporte une succession de trous 25 bordés. Pour cela, chaque trou 25 comporte un oeillet 26 serti sur le bord de chaque trou 25.

Le diamètre et/ou l'espacement des trous 25 bordés ainsi que leur géométrie peuvent être variables, sur la longueur de chaque portion du flan métallique mince 20 en fonction de la géométrie de la poutre et des déformations en allongement à obtenir pour piloter l'absorption d'énergie et non pas la subir.

Selon une variante, chaque portion du flan métallique mince peut comporter une alternance de creux 15 et de relief 16 et une succession de trous 25 bordés.

Les creux 15 et les reliefs 16 sont réalisés en faisant passer un flan métallique d'épaisseur constante supérieure ou égale à l'épaisseur des reliefs 16, entre deux cylindres, non représentés, comportant des empreintes en relief correspondant au creux 15 à obtenir sur le flan métallique mince 10 à partir duquel est formée la poutre 1 d'absorption d'énergie.

Grâce à la présence des creux 15 et des reliefs 16 et/ou des trous 17 ou 25, chaque portion du flan métallique mince 10 et 20 est orthotrope et de ce fait chaque côté 2, 3, 4 et 5 de la poutre est orthotrope de façon à générer un maximum de déformations, en allongement, du matériau constitutif dudit flan métallique mince et à contrôler les déformations lors d'une sollicitation en déformation de ladite poutre, notamment en compression axiale.

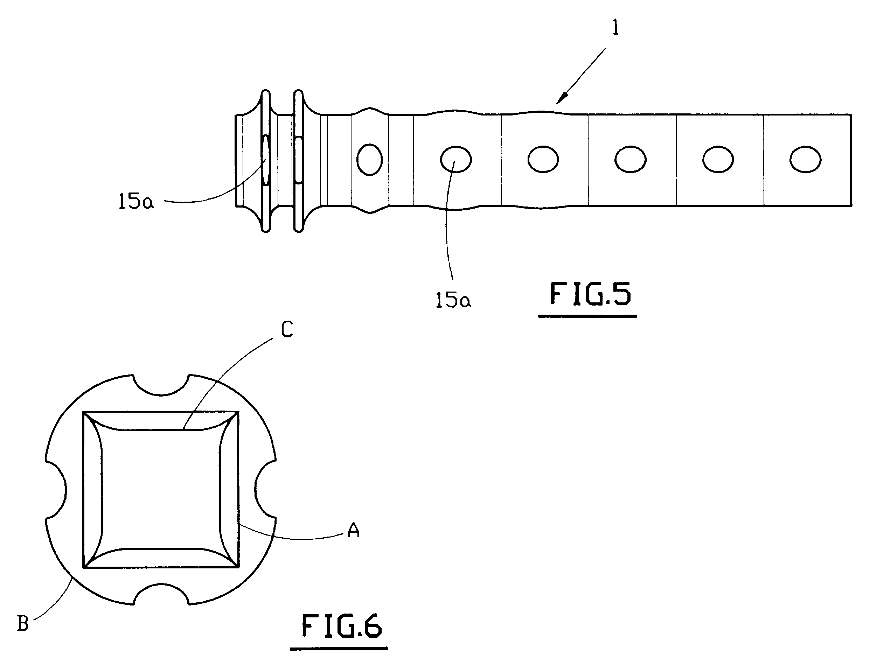

Comme cela apparait aux figures 5 et 6 qui représentent respectivement une vue en plan d'une poutre conforme à l'invention, en compression axiale et une vue de l'extrémité déformée de cette poutre, la poutre 1, lors d'une compression axiale, s'écrase en accordéon selon son axe longitudinal.

En effet, au cours de cette compression axiale, les creux 15a de section circulaire et les creux 15c de forme allongée orientés perpendiculairement à l'axe longitudinal de la poutre 1 s'écrasent progressivement.

Par conséquent, le périmètre externe initial de la poutre 1 augmente progressivement pour atteindre le périmètre externe B dans les zones comportant les creux 15a et 15c, comme représenté à la Fig. 6 où le périmètre initial est indiqué par A.

L'augmentation du périmètre externe se produit d'abord au niveau de la première série de creux 15a de section circulaire, c'est à dire au niveau de la série de creux 15a située à proximité de l'extrémité de la poutre 1 sur laquelle est appliquée le choc, puis au niveau de la seconde série 15a et ainsi de suite.

De ce fait, l'augmentation du périmètre externe de la poutre génère un maximum de déformations en allongement du matériau constitutif du flan métallique mince formant ladite poutre dans les zones comportant les creux 15a et 15c.

Par ailleurs, au cours de la compression axiale de la poutre 1, les creux 15b de forme allongée, orientés parallèlement à l'axe longitudinal de cette poutre et les creux 15d de forme triangulaire s'écrasent également de telle sorte que le périmètre interne initial de la poutre 1 augmente pour atteindre le périmètre interne C (Fig. 6).

Cette augmentation du périmètre interne de la poutre génère aussi un maximum de déformations en allongement du matériau constitutif du flan métallique mince formant ladite poutre dans les zones comportant les creux 15b de forme allongée et les creux 15d de forme triangulaire.

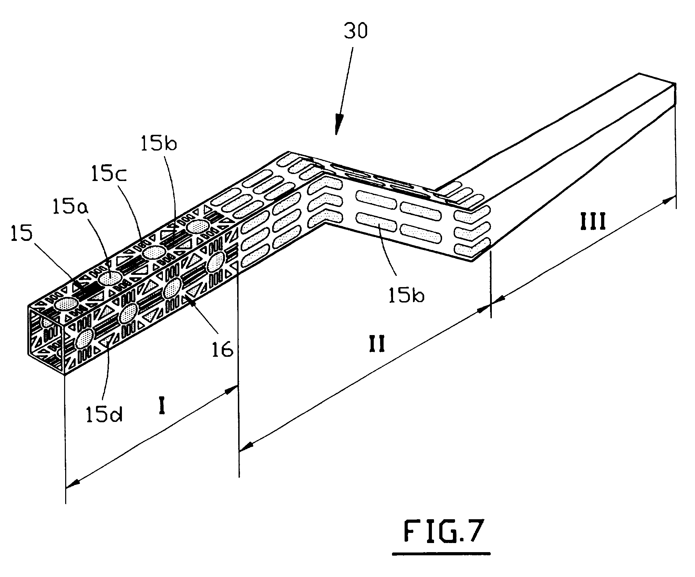

Sur la Fig. 7, on a représenté un exemple d'un longeron 30 de véhicule automobile réalisée à partir d'une poutre d'absorption d'énergie selon l'invention et qui comporte une première zone I supportant notamment le moteur et le train avant. Dans cette zone I qui doit absorber le maximum d'énergie et générer un maximum de déformations en allongement, les côtés du longeron présentent une hétérogénéité d'épaisseur formée d'une alternance de creux 15 et de reliefs 16 et/ou de trous.

Le longeron 30 comporte une seconde zone II qui doit absorber moins d'énergie et qui comporte, à cet effet, des creux 15b de forme allongée s'étendant parallèlement à l'axe longitudinal du longeron 30 et une troisième zone III pratiquement indéformable.

L'épaisseur du flan métallique mince 10 dans les creux 15 est de l'ordre de 4/10ème de millimètre.

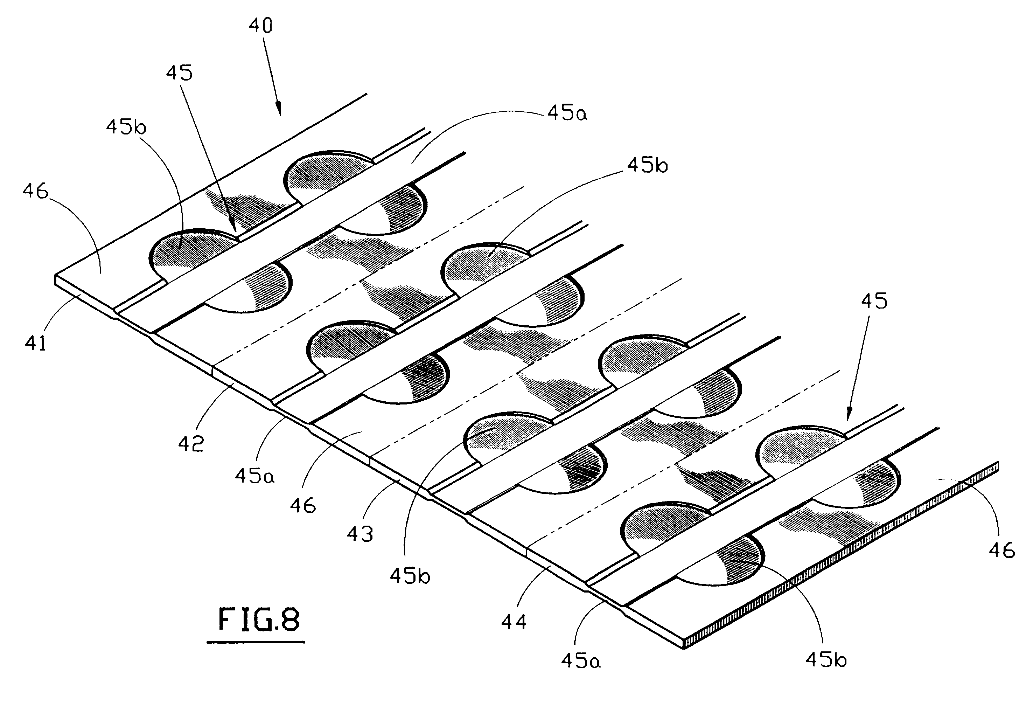

Selon une autre variante représentée à la Fig.8, le flan métallique mince 40 par exemple en acier ou en aluminium ou en alliage d'aluminium est constitué de quatre portions 41, 42, 43 et 44.

Chacune de ces portions 41, 42, 43 et 44 est orthotrope et est formée d'une alternance de creux 45 et de reliefs 46.

La répartition et la géométrie de ces creux 45 ainsi que leur forme sont fonction de la géométrie de la poutre et des déformations en allongement à obtenir lors d'une sollicitation en déformation de ladite poutre.

Dans ce mode de réalisation et dans chaque portion 41, 42, 43 et 44 correspondante, les creux 45 sont formés par au moins une rainure 45a s'étendant sur toute la longueur du flan métallique 40 et par des creux 45b à contour limité, disposés de part et d'autre et débouchant dans la rainure 45a correspondante.

Les creux 45a et 45b ainsi que les reliefs 46 sont ménagés sur les deux faces principales du flan métallique 40 et opposés les uns aux autres.

De préférence, les creux 45b possèdent un contour en forme de demi-cercle et sont disposés les uns en regard des autres par rapport à l'axe longitudinal de la rainure 45a correspondante.

De plus, le fond de chaque creux 45b est en pente dirigée vers le fond de la rainure 45a.

Les creux 45a et 45b peuvent être formés sur l'une des faces de chaque portion, soit la face supérieure ou soit la face inférieure ou encore alternativement sur l'une des faces ou sur les deux faces de chacune des portions 41, 42, 43 et 44.

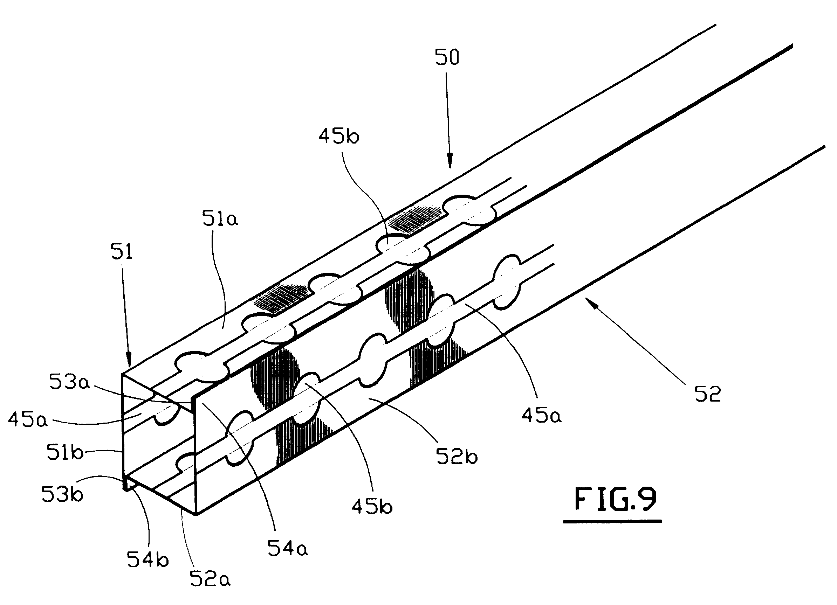

Sur la Fig. 9, on a représenté schématiquement un exemple d'un longeron 50 de véhicule automobile réalisé à partir de deux flans métalliques, respectivement 51 et 52, selon l'invention.

Chaque flan métallique 51 et 52 comporte deux portions, respectivement 51a et 51b ; 52a et 52b, pliées à 90° et comportant chacune au niveau de son bord longitudinal libre, un bord tombé, respectivement 53a et 53b ; 54a et 54b destiné à être soudé entre eux, par exemple par résistance par points ou par molette pour former le longeron 50.

Chaque portion des flans métalliques 51 et 52 comporte des creux et des reliefs.

Dans l'exemple de réalisation représenté à la Fig. 9, les creux sont formés par une rainure 45a et par des creux 45b possédant un contour en forme de demi-cercle.

Les creux et les reliefs formés sur les flans métalliques minces 51 et 52 peuvent posséder la forme et la répartition des creux et des reliefs des précédents modes de réalisation.

Ainsi, une poutre selon l'invention comportant une hétérogénéité d'épaisseur formée d'une alternance de creux et de reliefs permet d'obtenir un pourcentage de la surface développée de la poutre se déformant en allongement correspondant à 80% de la surface développée totale de ladite poutre tandis que 20% de ladite surface développée se déforment en flexion.

La quantité d'énergie absorbée par gramme du matériau est supérieure à 30J avec une poutre d'absorption d'énergie selon l'invention réalisée en un acier bas carbone du type IFHR dont la limite d'élasticité est égale à 340 Mpa.

Avec une poutre d'absorption d'énergie selon l'état de la technique de section carrée ou rectangulaire, réalisée à partir d'un flan métallique mince d'épaisseur constante et égale à l'épaisseur des reliefs d'une poutre selon l'invention, le pourcentage de la surface développée de la poutre se déformant en allongement correspond à 10% et le pourcentage de la surface développée de ladite poutre se déformant en flexion correspond à 90%.

De plus, la quantité d'énergie absorbée par gramme du matériau constituant la poutre selon l'état de la technique est de 7J/g.

On voit donc qu'une poutre selon l'invention réalisée à partir d'un flan métallique mince orthotrope, permet de multiplier par huit le pourcentage de la surface développée de la poutre se déformant en allongement et de multiplier sensiblement par quatre la quantité d'énergie absorber par gramme du matériau constituant la poutre et cela avec un flan métallique d'épaisseur et de poids identiques.

Avec une poutre d'absorption d'énergie comportant des emboutis, le pourcentage de la surface développée se déformant en allongement n'est que de 30%.

De plus, avec une poutre selon l'invention, le rapport longueur initiale sur longueur compactée minimale après déformation maximale est égale à plus de 85%, c'est à dire que l'organisation du plissement est optimal.

Ainsi, il est possible, en organisant la géométrie et la disposition des creux et des reliefs, d'imposer la courbe force-déplacement de la déformation, ainsi que les courbes force-temps et déplacement-temps, et en particulier de supprimer le pic d'accélération habituel à l'origine du choc.

Ainsi, un longeron ou une traverse formé à partir d'une poutre selon l'invention génère un maximum de déformations en allongement du matériau constitutif de ladite poutre ce qui permet d'augmenter la sécurité des occupants des véhicules, tout en diminuant le poids de ces véhicules par l'utilisation de flans métalliques minces en acier ou en aluminium ou en alliage d'aluminium pour la réalisation de cette poutre d'absorption d'énergie.

## Revendications

1. Poutre d'absorption d'énergie réalisée à partir d'au moins un flan métallique mince (10, 40) orthotrope pour générer un maximum de déformations en allongement du matériau constitutif dudit flan métallique mince (10, 40) et pour contrôler les déformations lors d'une sollicitation en déformation de ladite poutre (1), notamment en compression axiale, caractérisée en ce que le flan métallique mince (10, 40) présente une hétérogénéité d'épaisseur formée d'une alternance de creux (15, 45) et de reliefs (16, 46).

2. Poutre selon la revendication 1, caractérisée en ce que les creux (15, 45) et les reliefs (16, 46) sont répartis selon au moins deux directions orthogonales du flan métallique mince (10, 40).

3. Poutre selon la revendication 1 ou 2, caractérisée en ce que les creux (15, 45) et les reliefs (16, 46) sont ménagés sur les deux faces principales du flan métallique (10, 40) et opposés les uns aux autres.

4. Poutre selon l'une des revendications 1 à 3 , caractérisée en ce que les creux (15) sont formés par des creux (15a) de section circulaire, des creux (15b, 15c) de forme allongée, orientés parallèlement ou perpendiculairement à l'axe longitudinal de la poutre (1) et des creux (15d) de forme triangulaire.

5. Poutre selon l'une des revendications 1 à 4, caractérisée en ce que les creux (45) sont formés par au moins une rainure (45a) s'étendant sur toute la longueur du flan métallique (40) et par des creux (45b) à contour limité disposés de part et d'autre et débouchant dans la rainure (45a).

6. Poutre selon la revendication 5, caractérisé en ce que chaque creux (45b) possède un contour en forme de demi-cercle.

7. Poutre selon les revendications 5 et 6, caractérisée en ce que les creux (45b) sont disposés les uns en regard des autres par rapport à l'axe longitudinal de la rainure (45a).

8. Poutre selon l'une des revendications 5 à 7, caractérisée en ce que le fond de chaque creux (45b) à contour limité est en pente dirigée vers le fond de la rainure (45a).

9. Poutre selon l'une quelconque des revendications précédentes, caractérisée en ce que l'épaisseur du flan métallique mince (10, 40) dans les creux (15, 45) est de l'ordre de 4/10ème de millimètre.

10. Poutre selon l'une quelconque des revendications précédentes, caractérisée en ce que le matériau constitutif du flan métallique mince (10, 20, 40) est de l'acier.

11. Poutre selon l'une quelconque des revendications 1 à 9, caractérisée en ce que le matériau constitutif du flan métallique mince (10, 20, 40) est de l'aluminium ou un alliage d'aluminium.

12. Poutre selon l'une quelconque des revendications précédentes, caractérisée en ce qu'elle forme un longeron ou une traverse d'un véhicule automobile.

13. Flan métallique mince pour la réalisation d'une poutre (1) d'absorption d'énergie comportant au moins trois côtés, notamment d'un longeron ou d'une traverse d'un véhicule automobile ou ferroviaire, ledit flan métallique étant orthotrope pour générer un maximum de déformations en allongement du matériau constitutif dudit flan métallique mince (10, 40) et pour contrôler les déformations lors d'une sollicitation en déformations de ce flan métallique mince (10, 40), notamment en compression axiale, caractérisé en ce qu'il présente une hétérogénéité d'épaisseur formée d'une alternance de creux (15, 45) et de reliefs (16, 46).

14. Flan métallique mince selon la revendication 13, caractérisé en ce que les creux (15, 45) et les reliefs (16, 46) sont répartis selon au moins deux directions orthogonales dudit flan métallique mince (10, 40).

15. Flan métallique mince selon les revendications 13 et 14, caractérisé en ce que les creux (15, 45) et les reliefs (16, 46) sont ménagés sur les deux faces principales du flan métallique (10, 40) et opposés les uns aux autres.

16. Flan métallique mince selon l'une quelconque des revendications 13 à 15, caractérisé en ce qu'il comporte des portions (11, 12, 13, 14 ; 41 ; 42, 43 , 44) parallèles dont le nombre est égal au nombre de côtés (2, 3, 4, 5) de la poutre (1).

17. Flan métallique mince selon l'une quelconque des revendications 13 à 16 , caractérisé en ce que les creux (15) sont formés par des creux (15a) de section circulaire, des creux (15b, 15c) de forme allongée, orientés parallèlement ou perpendiculairement à l'axe longitudinal du flan métallique (10) et des creux (15d) de forme triangulaire.

18. Flan métallique mince selon les revendications 16 et 17, caractérisé en ce que les creux (15a) de section circulaire sont ménagés dans le sens longitudinal de chaque portion (11, 12, 13, 14) et les centres de ces creux (15a) sont situés sur l'axe de symétrie longitudinal de ladite portion (11, 12, 13, 14) correspondante.

19. Flan métallique mince selon les revendications 16 et 17, caractérisé en ce que les creux (15b) de forme allongée et orientés parallèlement à l'axe de symétrie longitudinal de chaque portion (11, 12, 13, 14) sont disposés entre les creux (15a) de section circulaire de chacune desdites portions (11, 12, 13, 14).

20. Flan métallique mince selon les revendications 16 et 17, caractérisé en ce que les creux (15c) de forme allongée et orientés perpendiculairement à l'axe de symétrie longitudinal de chaque portion (11, 12, 13, 14) sont disposés entre les creux (15a) de section circulaire de deux portions (11, 12, 13, 14) adjacentes et situées sur le même axe transversal dudit flan métallique mince (10).

21. Flan métallique mince selon les revendications 16 et 17, caractérisé en ce que les creux (15d) de section triangulaire sont disposés entre les creux (15b) de forme allongée, orientés parallèlement à l'axe de symétrie longitudinal d'une portion (11, 12, 13, 14) et les creux (15b) de forme allongée, orientés parallèlement à l'axe de symétrie longitudinal de la portion (11, 12, 13, 14) adjacente.

22. Flan métallique mince selon l'une quelconque des revendications 13, 14 ou 15, caractérisé en ce que les creux (45) sont formés par au moins une rainure (45a) s'étendant sur toute la longueur du flan métallique (40) et par des creux (45b) à contour limité, disposés de part et d'autre et débouchant dans ladite rainure (45a).

23. Flan métallique mince selon les revendications 16 et 22, caractérisé en ce que chaque rainure (45a) est ménagée dans le sens longitudinal de chaque portion (41, 42, 43, 44) et située sur l'axe de symétrie longitudinal de ladite portion (41, 42, 43, 44) correspondante.

24. Flan métallique mince selon la revendication 22, caractérisé en ce que chaque creux (45b) possède un contour en forme de demi-cercle.

25. Flan métallique mince selon les revendications 22 et 24, caractérisé en ce que les creux (45b) sont disposés les uns en regard des autres par rapport à l'axe longitudinal de la rainure (45a).

26. Flan métallique mince selon des revendications 22, 24 ou 25, caractérisé en ce que le fond de chaque creux (45b) à contour limité est en pente dirigée vers le fond de la rainure (45a).

27. Flan métallique mince selon l'une quelconque des revendications 13 à 26, caractérisé en ce que le matériau constitutif dudit flan métallique mince (10, 20, 40) est de l'acier.

28. Flan métallique mince selon l'une quelconque des revendications 13 à 26, caractérisé en ce que le matériau constitutif dudit flan métallique mince (10, 20, 40) est de l'aluminium ou un alliage d'aluminium.

29. Flan métallique mince selon l'une quelconque des revendications 13 à 28, caractérisé en ce que les creux (15, 45) et les reliefs (16, 46) sont réalisés en faisant passer un flan métallique d'épaisseur constante supérieure ou égale à l'épaisseur des reliefs (16, 46), entre deux cylindres comportant des empreintes en relief correspondant au creux (15, 45) à obtenir sur ledit flan métallique (10, 40).

30. Flan métallique mince selon l'une quelconque des revendications 13 à 29, caractérisé en ce qu'il présente une épaisseur maximale inférieure ou égale à 3mm.

## Patentansprüche

1. Träger zur Absorption von Energie, der aus wenigstens einem orthotropen, dünnen metallischen Zuschnitt (10, 40) verwirklicht ist, um in der Verlängerung des den dünnen metallischen Zuschnitt (10, 40) bildenden Materials maximale Deformationen zu erzeugen und um die Deformationen bei einer Deformationsbeanspruchung des Trägers (1), insbesondere bei axialer Kompression, zu kontrollieren, dadurch gekennzeichnet, daß der dünne metallische Zuschnitt (10, 40) eine unterschiedliche Dicke aufweist, die durch abwechselnde Vertiefungen (15, 45) und Erhöhungen (16, 46) gebildet ist.

2. Träger nach Anspruch 1, dadurch gekennzeichnet, daß die Vertiefungen (15, 45) und die Erhöhungen (16, 46) in wenigstens zwei zueinander senkrechten Richtungen des dünnen metallischen Zuschnitts (10, 40) verteilt sind.

3. Träger nach Anspruch 1 oder 2, dadurch gekennzeichnet, daß die Vertiefungen (15, 45) und die Erhöhungen (16, 46) auf den beiden Hauptflächen des metallischen Zuschnitts (10, 40) und einander gegenüber angeordnet sind.

4. Träger nach einem der Ansprüche 1 bis 3, dadurch gekennzeichnet, daß die Vertiefungen (15) durch Vertiefungen (15a) mit kreisförmigem Querschnitt, durch Vertiefungen (15b, 15c) mit länglicher Form, die parallel oder senkrecht zur Längsachse des Trägers (1) orientiert sind, und durch Vertiefungen (15d) mit dreieckiger Form gebildet sind.

5. Träger nach einem der Ansprüche 1 bis 4, dadurch gekennzeichnet, daß die Vertiefungen (45) durch wenigstens eine Rinne (45a), die sich über die gesamte Länge des metallischen Zuschnitts (40) erstreckt, und durch Vertiefungen (45b) mit begrenztem Umriß, die beiderseits der Rinne (45a) angeordnet sind und in diese münden, gebildet sind.

6. Träger nach Anspruch 5, dadurch gekennzeichnet, daß jede Vertiefung (45b) einen halbkreisförmigen Umriß besitzt.

7. Träger nach den Ansprüchen 5 und 6, dadurch gekennzeichnet, daß die Vertiefungen (45b) in bezug auf die Längsachse der Rinne (45a) einander gegenüber angeordnet sind.

8. Träger nach einem der Ansprüche 5 bis 7, dadurch gekennzeichnet, daß der Boden jeder Vertiefung (45b) mit begrenztem Umriß ein Gefälle aufweist, das zum Boden der Rinne (45a) gerichtet ist.

9. Träger nach irgendeinem der vorangehenden Ansprüche, dadurch gekennzeichnet, daß die Dicke des dünnen metallischen Zuschnitts (10, 40) in den Vertiefungen (15, 45) in der Größenordnung von 4/10tel mm liegt.

10. Träger nach irgendeinem der vorangehenden Ansprüche, dadurch gekennzeichnet, daß das Material, aus dem der dünne metallische Zuschnitt (10, 20, 40) gebildet ist, Stahl ist.

11. Träger nach irgendeinem der Ansprüche 1 bis 9, dadurch gekennzeichnet, daß das Material, aus dem der dünne metallische Zuschnitt (10, 20, 40) gebildet ist, Aluminium oder eine Aluminiumlegierung ist.

12. Träger nach irgendeinem der vorangehenden Ansprüche, dadurch gekennzeichnet, daß er einen Längsträger oder einen Querträger eines Kraftfahrzeugs bildet.

13. Dünner metallischer Zuschnitt für die Herstellung eines wenigstens drei Seiten aufweisenden Trägers (1) zur Absorption von Energie, insbesondere eines Längsträgers oder eines Querträgers eines Kraftfahrzeugs oder Schienenfahrzeugs, wobei der metallische Zuschnitt orthotrop ist, um in der Verlängerung des den dünnen metallischen Zuschnitt (10, 40) bildenden Materials maximale Deformationen zu erzeugen und um die Deformationen bei einer Deformationsbeanspruchung dieses dünnen metallischen Zuschnitts (10, 40), insbesondere bei axialer Kompression, zu kontrollieren, dadurch gekennzeichnet, daß er eine unterschiedliche Dicke aufweist, die durch abwechselnde Vertiefungen (15, 45) und Erhöhungen (16, 46) gebildet ist.

14. Dünner metallischer Zuschnitt nach Anspruch 13, dadurch gekennzeichnet, daß die Vertiefungen (15, 45) und Erhöhungen (16, 46) in wenigstens zwei zueinander senkrechten Richtungen des dünnen metallischen Zuschnitts (10, 40) verteilt sind.

15. Dünner metallischer Zuschnitt nach den Ansprüchen 13 und 14, dadurch gekennzeichnet, daß die Vertiefungen (15, 45) und die Erhöhungen (16, 46) an den beiden Hauptflächen des metallischen Zuschnitts (10, 40) und einander gegenüber angeordnet sind.

16. Dünner metallischer Zuschnitt nach irgendeinem der Ansprüche 13 bis 15, dadurch gekennzeichnet, daß er parallele Abschnitte (11, 12, 13, 14; 41; 42, 43, 44) enthält, deren Anzahl gleich der Anzahl der Seiten (2, 3, 4, 5) des Trägers (1) ist.

17. Dünner metallischer Zuschnitt nach irgendeinem der Ansprüche 13 bis 16, dadurch gekennzeichnet, daß die Vertiefungen (15) durch Vertiefungen (15a) mit kreisförmigem Querschnitt, durch Vertiefungen (15b, 15c) mit länglicher Form, die parallel oder senkrecht zur Längsachse des metallischen Zuschnitts (10) orientiert sind, und durch Vertiefungen (15d) mit dreieckiger Form gebildet sind.

18. Dünner metallischer Zuschnitt nach den Ansprüchen 16 und 17, dadurch gekennzeichnet, daß die Vertiefungen (15a) mit kreisförmigem Querschnitt in Längsrichtung jedes Abschnitts (11, 12, 13, 14) angeordnet sind und die Zentren dieser Vertiefungen (15a) sich auf der longitudinalen Symmetrieachse des entsprechenden Abschnitts (11, 12, 13, 14) befinden.

19. Dünner metallischer Zuschnitt nach den Ansprüchen 16 und 17, dadurch gekennzeichnet, daß die Vertiefungen (15b) mit länglicher Form, die parallel zur longitudinalen Symmetrieachse jedes Abschnitts (11, 12, 13, 14) orientiert sind, zwischen den Vertiefungen (15a) mit kreisförmigem Querschnitt jedes dieser Abschnitte (11, 12, 13, 14) angeordnet sind.

20. Dünner metallischer Zuschnitt nach den Ansprüchen 16 und 17, dadurch gekennzeichnet, daß die Vertiefungen (15c) mit länglicher Form, die senkrecht zur longitudinalen Symmetrieachse jedes Abschnitts (11, 12, 13, 14) orientiert sind, zwischen den Vertiefungen (15a) mit kreisförmigem Querschnitt zweier benachbarter Abschnitte (11, 12, 13, 14), die sich auf derselben transversalen Achse des dünnen metallischen Zuschnitts (10) befinden, angeordnet sind.

21. Dünner metallischer Zuschnitt nach den Ansprüchen 16 und 17, dadurch gekennzeichnet, daß die Vertiefungen (15d) mit dreieckigem Querschnitt zwischen den Vertiefungen (15b) mit länglicher Form, die parallel zur longitudinalen Symmetrieachse eines Abschnitts (11, 12, 13, 14) orientiert sind, und den Vertiefungen (15b) mit länglicher Form, die parallel zur longitudinalen Symmetrieachse des benachbarten Abschnitts (11, 12, 13, 14) orientiert sind, angeordnet sind.

22. Dünner metallischer Zuschnitt nach irgendeinem der Ansprüche 13, 14 oder 15, dadurch gekennzeichnet, daß die Vertiefungen (45) durch wenigstens eine Rinne (45a), die sich über die gesamte Länge des metallischen Zuschnitts (40) erstreckt, und durch Vertiefungen (45b) mit begrenztem Umriß, die sich beiderseits der Rinne (45a) befinden und in diese münden, gebildet sind.

23. Dünner metallischer Zuschnitt nach den Ansprüchen 16 und 22, dadurch gekennzeichnet, daß jede Rinne (45a) in Längsrichtung jedes Abschnitts (41, 42, 43, 44) angeordnet ist und sich auf der longitudinalen Symmetrieachse jedes entsprechenden Abschnitts (41, 42, 43, 44) befindet.

24. Dünner metallischer Zuschnitt nach Anspruch 22, dadurch gekennzeichnet, daß jede Vertiefung (45b) einen halbkreisförmigen Umriß besitzt.

25. Dünner metallischer Zuschnitt nach den Ansprüchen 22 und 24, dadurch gekennzeichnet, daß die Vertiefungen (45b) in bezug auf die Längsachse der Rinne (45a) einander gegenüber angeordnet sind.

26. Dünner metallischer Zuschnitt nach den Ansprüchen 22, 24 oder 25, dadurch gekennzeichnet, daß der Boden jeder Vertiefung (45b) mit begrenztem Umriß ein Gefälle aufweist, das zum Boden der Rinne (45a) gerichtet ist.

27. Dünner metallischer Zuschnitt nach irgendeinem der Ansprüche 13 bis 26, dadurch gekennzeichnet, daß das Material, aus dem der dünne metallische Zuschnitt (10, 20, 40) gebildet ist, Stahl ist.

28. Dünner metallischer Zuschnitt nach irgendeinem der Ansprüche 13 bis 26, dadurch gekennzeichnet, daß das Material, aus dem der dünne metallische Zuschnitt (10, 20, 40) gebildet ist, Aluminium oder eine Aluminiumlegierung ist.

29. Dünner metallischer Zuschnitt nach irgendeinem der Ansprüche 13 bis 28, dadurch gekennzeichnet, daß die Vertiefungen (15, 45) und die Erhöhungen (16, 46) dadurch hergestellt werden, daß ein metallischer Zuschnitt mit konstanter Dicke, die größer oder gleich der Dicke der Erhöhungen (16, 46) ist, zwischen zwei Zylindern hindurchgeführt wird, die erhabene Prägungen besitzen, die den in dem metallischen Zuschnitt (10, 40) zu erhaltenden Vertiefungen (15, 45) entsprechen.

30. Dünner metallischer Zuschnitt nach irgendeinem der Ansprüche 13 bis 29, dadurch gekennzeichnet, daß er eine maximale Dicke aufweist, die kleiner oder gleich 3 mm ist.

## Claims

1. Energy absorbing beam produced from at least one thin metal blank (10, 40) which is orthotropic so as to generate the maximum deformation on elongation of the material constituting said thin metal blank (10, 40) and to control the deformations under a deforming load on said beam (1), particularly under axial compression, characterised in that the thin metal blank (10, 40) has a heterogeneity of thickness formed by alternating hollows (15, 45) and reliefs (16, 46).

2. Beam according to claim 1, characterised in that the hollows (15, 45) and the reliefs (16, 46) are distributed in at least two orthogonal directions of the thin metal blank (10, 40).

3. Beam according to claim 1 or 2, characterised in that the hollows (15, 45) and the reliefs (16, 46) are provided on the two main surfaces of the metal blank (10, 40) and are arranged opposite one another.

4. Beam according to one of claims 1 to 3, characterised in that the hollows (15) are formed by hollows (15a) of circular section, hollows (15b, 15c) of elongated shape, oriented parallel or perpendicular to the longitudinal axis of the beam, and hollows (15d) which are triangular in shape.

5. Beam according to one of claims 1 to 4, characterised in that the hollows (45) are formed by at least one groove (45a) extending over the entire length of the metal blank (40) and by hollows (45b) of limited contour arranged on each side and opening into the groove (45a).

6. Beam according to claim 5, characterised in that each hollow (45b) has a semi-circular contour.

7. Beam according to claims 5 and 6, characterised in that the hollows (45b) are arranged opposite one another relative to the longitudinal axis of the groove (45a).

8. Beam according to one of claims 5 to 7, characterised in that the base of each hollow (45b) of limited contour slopes towards the base of the groove (45a).

9. Beam according to one of the preceding claims, characterised in that the thickness of the thin metal blank (10, 40) in the hollows (15, 45) is of the order of 4/10ths of a millimetre.

10. Beam according to one of the preceding claims, characterised in that the material constituting the thin metal blank (10, 20, 40) is steel.

11. Beam according to any one of claims 1 to 9, characterised in that the material constituting the thin metal blank (10, 20, 40) is aluminium or an aluminium alloy.

12. Beam according to one of the preceding claims, characterised in that it forms a longitudinal or transverse member of a motor vehicle.

13. Thin metal blank for producing an energy absorbing beam (1) comprising at least three sides, notably a longitudinal or transverse member of a road or rail vehicle, said metal blank being orthotropic so as to generate maximum deformation on elongation of the material constituting said thin metal blank (10, 40) and to control the deformations under a deforming load on said thin metal blank (10, 40), particularly under axial compression, characterised in that it has a heterogeneity of thickness formed by alternating hollows (15, 45) and reliefs (16, 46).

14. Thin metal blank according to claim 13, characterised in that the hollows (15, 45) and the reliefs (16, 46) are distributed in at least two perpendicular directions of said thin metal blank (10, 40).

15. Thin metal blank according to claims 13 and 14, characterised in that the hollows (15, 45) and the reliefs (16, 46) are provided on the two main surfaces of the metal blank (10, 40) and are arranged opposite one another.

16. Thin metal blank according to any one of claims 13 to 15, characterised in that it comprises parallel portions (11, 12, 13, 14; 41, 42, 43, 44) equal in number to the number of sides (2, 3, 4, 5) of the beam (1).

17. Thin metal blank according to any one of claims 13 to 16, characterised in that the hollows (15) are formed by hollows (15a) of circular section, hollows (15b, 15c) of elongated shape, oriented parallel or perpendicular to the longitudinal axis of the metal blank (10), and hollows (15d) which are triangular in shape.

18. Thin metal blank according to claims 16 and 17, characterised in that the hollows (15a) of circular section are provided in the longitudinal direction of each portion (11, 12, 13, 14) and the centres of these hollows (15a) are located on the longitudinal axis of symmetry of said corresponding portion (11, 12, 13, 14).

19. Thin metal blank according to claims 16 and 17, characterised in that the hollows (15b) of elongated shape oriented parallel to the longitudinal axis of symmetry of each portion (11, 12, 13, 14) are arranged between the hollows (15a) of circular section of each of said portions (11, 12, 13, 14).

20. Thin metal blank according to claims 16 and 17, characterised in that the hollows (15c) of elongated shape oriented perpendicular to the longitudinal axis of symmetry of each portion (11, 12, 13, 14) are arranged between the hollows (15a) of circular section of two adjacent portions (11, 12, 13, 14) located on the same transverse axis of said thin metal blank (10).

21. Thin metal blank according to claims 16 and 17, characterised in that the hollows (15d) of triangular section are arranged between the hollows (15b) of elongated shape oriented parallel to the longitudinal axis of symmetry of a portion (11, 12, 13, 14) and the hollows (15b) of elongated shape oriented parallel to the longitudinal axis of symmetry of the adjacent portion (11, 12, 13, 14).

22. Thin metal blank according to any one of claims 13, 14 or 15, characterised in that the hollows (45) are formed by at least one groove (45a) extending over the entire length of the metal blank (40) and by hollows (45b) of limited contour arranged on each side and opening into the groove (45a).

23. Thin metal blank according to claims 16 and 22, characterised in that each groove (45a) is provided in the longitudinal direction of each portion (41, 42, 43, 44) and located on the longitudinal axis of symmetry of said corresponding portion (41, 42, 43, 44).

24. Thin metal blank according to claim 22, characterised in that each hollow (45b) has a semi-circular contour.

25. Thin metal blank according to claims 22 and 24, characterised in that the hollows (45b) are arranged opposite one another relative to the longitudinal axis of the groove (45a).

26. Thin metal blank according to claims 22, 24 or 25, characterised in that the base of each hollow (45b) of limited contour slopes towards the base of the groove (45a).

27. Thin metal blank according to any one of claims 13 to 26, characterised in that the material constituting the thin metal blank (10, 20, 40) is steel.

28. Thin metal blank according to any one of claims 13 to 26, characterised in that the material constituting the thin metal blank (10, 20, 40) is aluminium or an aluminium alloy.

29. Thin metal blank according to any one of claims 13 to 28, characterised in that the hollows (15, 45) and the reliefs (16, 46) are produced by passing a metal blank of constant thickness, greater than or equal to the thickness of the reliefs (16, 46), between two cylinders comprising embossed impressions corresponding to the hollows (15, 45) to be produced on said metal blank (10, 40).

30. Thin metal blank according to any one of claims 13 to 29, characterised in that it has a maximum thickness less than or equal to 3 mm.
